## Europäisches Patentamt
## European Patent Office
## Office européen des brevets

(11) Numéro de publication: **0 047 196**
**B1**

(12) **FASCICULE DE BREVET EUROPEEN**

(45) Date de publication du fascicule du brevet: **28.09.83**

(51) Int. Cl.³: **G 02 F 1/33, G 02 F 1/11**

(21) Numéro de dépôt: **81401257.1**

(22) Date de dépôt: **04.08.81**

(54) **Structure optique intégrée à couplage directionnel conforme et système comprenant une telle structure.**

(30) Priorité: **29.08.80 FR 8018772**

(43) Date de publication de la demande:
**10.03.82 Bulletin 82/10**

(45) Mention de la délivrance du brevet:
**28.09.83 Bulletin 83/39**

(84) Etats contractants désignés:
**DE GB NL**

(56) Documents cités:
**DE - A - 3 006 102**
**FR - A - 2 204 813**
**US - A - 4 026 632**

(73) Titulaire: **THOMSON-CSF**
**173, Boulevard Haussmann**
**F-75379 Paris Cedex 08 (FR)**

(72) Inventeur: **Puech, Claude**
**THOMSON-CSF SCPI 173, bld Haussmann**
**F-75360 Paris Cedex 08 (FR)**
Inventeur: **Papuchon, Michel**
**THOMSON-CSF SCPI 173, bld Haussmann**
**F-75360 Paris Cedex 08 (FR)**
Inventeur: **Arditty, Hervé**
**THOMSON-CSF SCPI 173, bld Haussmann**
**F-75360 Paris Cedex 08 (FR)**

(74) Mandataire: **Wang, Pierre et al,**
**THOMSON-CSF SCPI 173, Bld Haussmann**
**F-75379 Paris Cedex 08 (FR)**

Courier Press, Leamington Spa, England.

Structure optique integree a couplage directionnel conforme et système comprenant une telle structure

La présente invention se rapporte aux structures optiques intégrées mettant en oeuvre la propagation guidée de rayonnements optiques et plus particulièrement aux coupleurs directionnels. En rapprochant sur une longueur appropriée deux guides d'ondes optiques monomodes, un échange d'énergie peut être observé. Les ondes évanescentes créent un couplage entre les guides d'ondes et il suffit que les ondes guidées aient des vitesses de propagation suffisamment proches l'une de l'autre pour qu'un transfert d'énergie puisse avoir lieu. Avec des guides d'ondes sans pertes, on peut réaliser un transfert total qui consiste à recueillir à la sortie du second guide d'onde tous les photons injectés à l'entrée du premier guide. En se basant sur l'effet électro-optique du matériau utilisé pour confectionner la structure optique intégrée d'un coupleur directionnel, on peut commander électriquement le transfert d'énergie. Cette commande électrique peut revêtir deux aspects suivant que le champ électrique est d'originé électrostatique ou produit par une onde électromagnétique susceptible d'accompagner les photons dans leur progression guidée. Lorsque le champ électrique est stationnaire, le résultat du transfert ne dépend pas de la répartition des photons de sorte que l'énergie injectée est aiguillée ou commutée en fonction des tensions électriques de commande appliquées aux électrodes de la structure. Par contre lorsque la commande dépend d'une onde électromagnétique qui accompagne les photons dans leur progression guidée, chaque photon subit un sort différent de ses voisins car le couplage directionnel qui le concerne reste conforme à un élément de la composition invariante véhiculée par l'onde électromagnétique.

En effectuant la commande électrique d'un coupleur directionnel réalisé sur un substrat électro-optique au moyen d'une ligne électromagnétique colinéaire parcourue par une onde sinusoïdale, on a pu obtenir à partir d'un flux lumineux continu un flux intermittent dont les pulsations sont de durée très inférieures à celles que l'on réalise avec des lasers à injection à mode bloqué. La réalisation d'un couplage directionnel conforme permet d'obtenir des sources d'impulsions lumineuses de très courte durée en partant de sources à émission continue. Cette technique ouvre la voie à des dispositifs de multiplexage-démultiplexage temporel qui peuvent traiter des signaux de durée inférieure à la picoseconde.

Le fonctionnement d'une structure optique intégrée mettant en oeuvre le couplage directionnel conforme dépend d'une adaptation précise de la vitesse de propagation de la ligne électromagnétique et celle des photons guidés. Par un dimensionnement approprié des électrodes de la ligne électromagnétique et par le choix de milieux de constantes diélectriques adéquates on aboutit à une structure encore imparfaite, car le processus de fabrication introduit des erreurs qu'il est ensuite difficile de compenser pour obtenir une parfaite coincidence des vitesses sur une distance de couplage de plusieurs centimètres.

Afin de pallier les inconvénients inhérents à la mise en oeuvre d'un moyen de confinement des photons basé sur l'effet électro-optique engendré par une onde électromagnétique, l'invention propose d'obtenir le confinement désiré en faisant agir sur les sections de guides d'ondes réservées au couplage directionnel des ondes élastiques capables d'engendrer la perturbation progressive d'indice avec la vitesse désirée.

L'invention a pour objet une structure optique intégrée à couplage directionnel conforme comprenant un substrat à la surface duquel sont agencés deux guides d'ondes optiques réalisant un échange d'énergie selon une distance de couplage prédéterminée, cet échange étant gouverné par des moyens conformateurs assurant selon cette surface la propagation synchrone d'une perturbation d'indice accompagnant les photons guidés, cette perturbation étant induite par une onde progressive, caractérisé en ce que lesdits moyens conformateurs comprennent un transducteur électromécanique d'émission de ladite onde, ladite onde progressive étant une onde élastique de surface, l'obliquité des fronts d'ondes atteignant lesdits guides étant telle qu'elle réalise ladite propagation synchrone.

L'invention sera mieux comprise au moyen de la description ci-après et des figures annexées parmi lesquelles:

Les figures 1 et 2 sont des schémas explicatifs.

La figure 3 est une vue isométrique d'une structure optique intégrée selon l'invention.

La figure 4 est un diagramme explicatif.

La figure 5 illustre le confinement d'énergie produit par le dispositif de la figure 3.

La figure 6 représente une première variante de réalisation du dispositif de la figure 3.

La figure 7 représente une seconde variante de réalisation du dispositif de la figure 3.

La figure 8 représente une troisième variante de réalisation du dispositif de la figure 3.

La figure 9 représente le schéma d'un système optique à impulsions utilisant des structures selon l'invention.

La figure 10 représente une quatrième variante de réalisation du dispositif de la figure 3.

La figure 11 représente une cinquième variante de réalisation du dispositif de la figure 3.

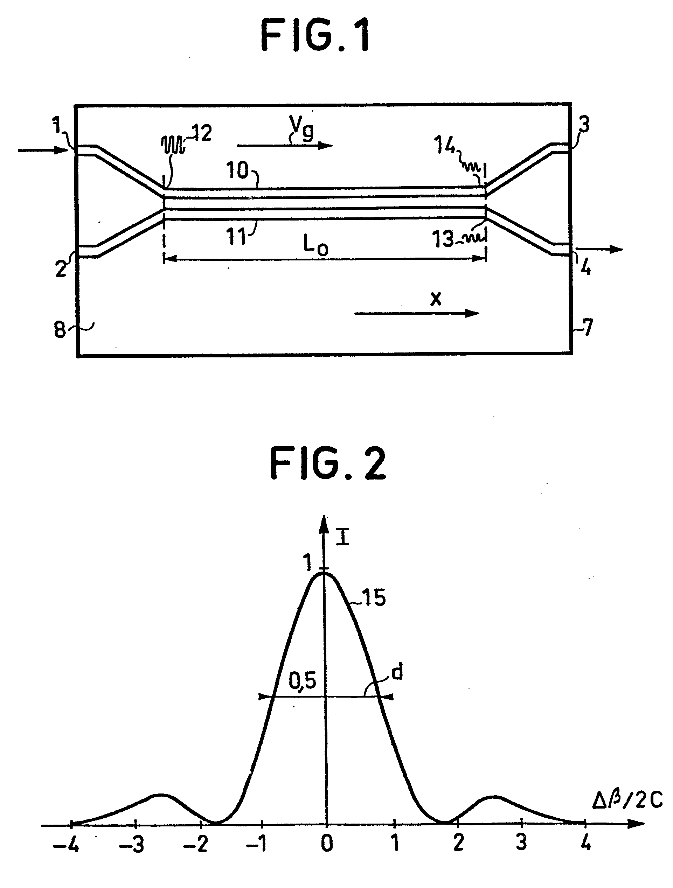

Sur la figure 1, on voit la structure d'un coupleur directionnel tel qu'on peut le réaliser en optique intégrée. Ce coupleur comprend un substrat 7, par exemple en niobate de lithium, à la surface 8 duquel on a formé deux régions diffusées 10 et 11 destinées à guider des rayonnements optiques échangés entre les voies 1—3 et 2—4. La variation d'indice nécessaire au guidage de la lumière peut être obtenue par dépôt d'une couche de titane sur la surface 8. Par photolithographie, on enlève la couche de titane sauf à l'aplomb des guides d'ondes 10 et 11 et on procède à l'opération de diffusion du titane déposé dans le niobate de lithium. Après enlèvement du titane restant, on obtient deux bandes diffusées environnées de milieux d'indice plus faible. En donnant à ces bandes diffusées une largeur et une profondeur de diffusion adéquates, on obtient deux guides d'ondes monomodes intégrés.

Pour mettre en oeuvre en échange par couplage directionnel, les guides d'ondes 10 et 11 sont rapprochés l'une de l'autre dans une section de longueur $L_o$ qui correspond à la distance de couplage désirée.

Si l'on injecte une onde 12 de longueur d'onde déterminée dans la voie 1, cette dernière se propage avec la vitesse de groupe $V_g$ dans le guide d'onde 10. L'onde 12 peut en se propageant échanger une partie plus ou moins importante de son énergie avec la structure du guide d'onde 11. L'échange d'énergie se fait par ondes évanescentes dans la section de rapprochement des guides d'ondes 10 et 11 où ceux-ci sont parallèles à l'axe x. L'étude théorique du couplage directionnel fait appel à la notion d'un coefficient de couplage c que l'on détermine à partir des indices de réfraction, de la largeur, de la profondeur et de l'écartement des guides d'ondes 10 et 11 dans la section d'échange. Cette théorie montre que le transfert total de l'énergie a lieu si les guides d'ondes sont sans pertes et si les vitesses de propagation ont des valeurs égales. Il existe donc une distance de couplage minimale $L_o$ qui, dans le cas de l'égalité des vitesses de groupe, assure un transfert total d'énergie entre les voies 1 et 4. Des distances multiple impair de cette distance donnent le même résultat.

Si $\beta_1$ et $\beta_2$ sont les constantes de phase respectives des ondes circulant dans les guides 10 et 11, la différence $\Delta\beta=\beta_2-\beta_1$ est nulle si les caractéristiques géométriques des guides sont les mêmes et si leurs indices de réfraction respectifs $n_1$ et $n_2$ sont égaux. Au bout de la distance $L_o$, le rapport I de l'énergie couplée dans la voie 4 à l'énergie injectée dans la voie 1 est égal à l'unité.

En supposant que l'on crée dans les guides d'ondes une différenciation des indices $n_1$ et $n_2$, la différence $\Delta n=n_2-n_1$ implique une différence des constantes de phase $\Delta\beta$. La théorie montre alors que le rapport de transfert énergétique I est fonction du rapport $\Delta\beta/2c$. Pour une longueur de couplage l, le rapport I peut se mettre sous la forme:

$$I=\frac{1}{\frac{\Delta\beta^2}{4c^2}+1}\sin^2 c.l.\sqrt{\frac{\Delta\beta^2}{4c^2}+1}$$

Sachant que le transfert total a lieu lorsque:

$$c.l.=(2\ k'-1)\pi/2$$

où k' est un entier positif, il vient:

$$I=\frac{1}{\frac{\Delta\beta^2}{4c^2}+1}\sin^2 \pi/2\sqrt{\frac{\Delta\beta^2}{4c^2}+1}$$

Cette expression mathématique est illustrée par la courbe 15 de la figure 2; celle-ci n'est rien d'autre que le fonction

$$\left(\frac{\sin \alpha}{\alpha}\right)^2$$

souvent rencontrée en optique.

La figure 2 montre que l'on peut moduler le transfert d'énergie pour obtenir un effet de répartition et à la limite un effet de commutation entre les voies 3 et 4. Cette modulation peut se concevoir statiquement ou cinétiquement. Elle concerne la variation d'indice $\Delta n$ qui peut être induite par un effet électro-optique et/ou par tout autre effet tel que l'effet photo-élastique.

Dans le cadre de la présente invention, la variation d'indice $\Delta n$ se présente sous la forme d'une perturbation qui accompagne la progression des photons guidés. Cette perturbation, qui se propage avec la vitesse de groupe $V_g$ présente autour d'une valeur nulle des variations d'indice $\Delta n$ suffisantes pour annuler le rapport de transfert I. Ainsi le photon siégeant à l'emplacement de cette valeur nulle subit un transfert total, alors que ses voisins qui tout au long de la distance de couplage $L_o$ voient un $\Delta n$ non nul, subissent un transfert amoindri fixé par le diagramme de la figure 2. Cette conception cinétique de la modulation du transfert d'énergie dans un coupleur directionnel a été proposée dans le cadre de structures utilisant un matériau électro-optique. Dans ce cas, la pertubation d'indice est induite par une ligne électromagnétique qui chevauche le coupleur directionnel. Le mode TEM propagé par la ligne électromagnétique doit avoir une vitesse de phase qui coincide tout au long de la section de couplage avec la vitesse de groupe $V_g$. Cette condition est difficile à satisfaire en pratique, car la réduction de vitesse nécessaire pour obtenir l'adaptation de phase entraine de sérieuses difficultés de fabrication au niveau de la ligne électromagnétique.

La technique de réalisation des circuits intégrés par photolithographie permet de réaliser actuellement des tracés rectilignes de plusieurs centimètres dont les écarts d'alignement sont de l'ordre du dixième de la longueur d'onde utilisée pour la contrôle interférométrique des translations. Cette haute précision peut être exploitée pour engendrer une perturbation d'indice avec une onde dont la vitesse de propagation est beaucoup plus faible que la vitesse de groupe $V_g$ des photons guidés. Ainsi, avec un indice effectif $n_e=2,3$, la vitesse de groupe $v_g$ est de l'ordre de $1,3.10^8$ m/s. Pour créer une perturbation d'indice adaptée en phase à cette vitesse, on peut envisager d'utiliser des ondes acoustiques ayant une vitesse de phase $v_a$ comprise entre $2.10^3$ et $5.10^3$ m/sec.

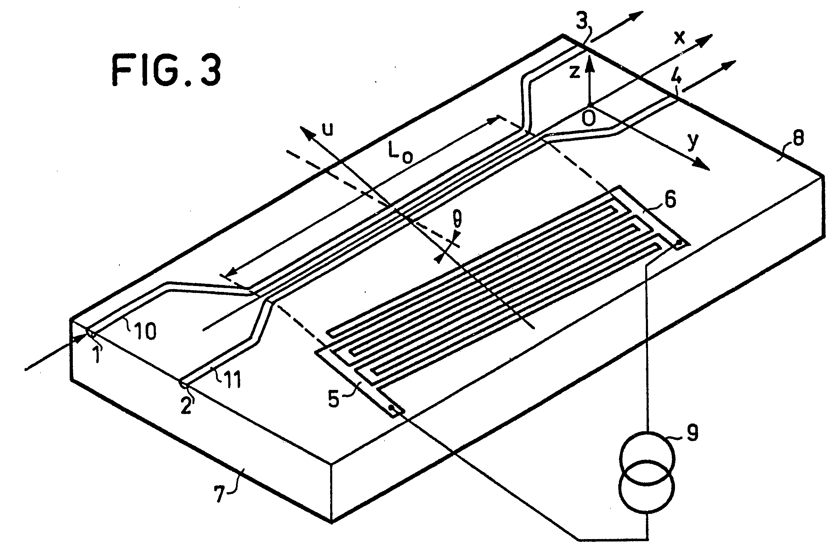

La figure 3 représente une structure optique intégrée conforme à l'invention.

Elle se compose par exemple d'un substrat 7 en niobate de lithium à la surface 8 duquel affleurent deux guides d'ondes monomodes 10 et 11 obtenus par diffusion localisée de titane. La section de couplage de longueur $L_o$ est alignée avec l'axe ox d'un système de référence cartésien oxyz. Le plan de la surface 8 est le plan oxy dans lequel sont émises des ondes élastiques de surface dont les fronts d'onde ont pour normale la direction U formant l'angle $\theta$ avec la direction parallèle à l'axe oy. L'émission des ondes élastiques de surface est assurée par un transducteur électromécanique excité par un générateur électrique 9. Ce transducteur comporte par exemple deux électrodes 5 et 6 en forme de peignes interdigités. La configuration des guides d'ondes 10 et 11 ainsi que celle des électrodes 5 et 6 peut faire l'objet d'une délimitation extremement précise par photolithographie. Des fronts d'ondes élastiques peuvent donc rencontrer les guides d'ondes avec une très faible obliquité qui conserve sa valeur sur une grande longueur de couplage $L_o$. Sur la figure 3, on a fortement exagéré l'écartement des guides d'ondes 10 et 11 ainsi d'ailleurs que l'inclinaison $\theta$ des dents du transducteur 5, 6.

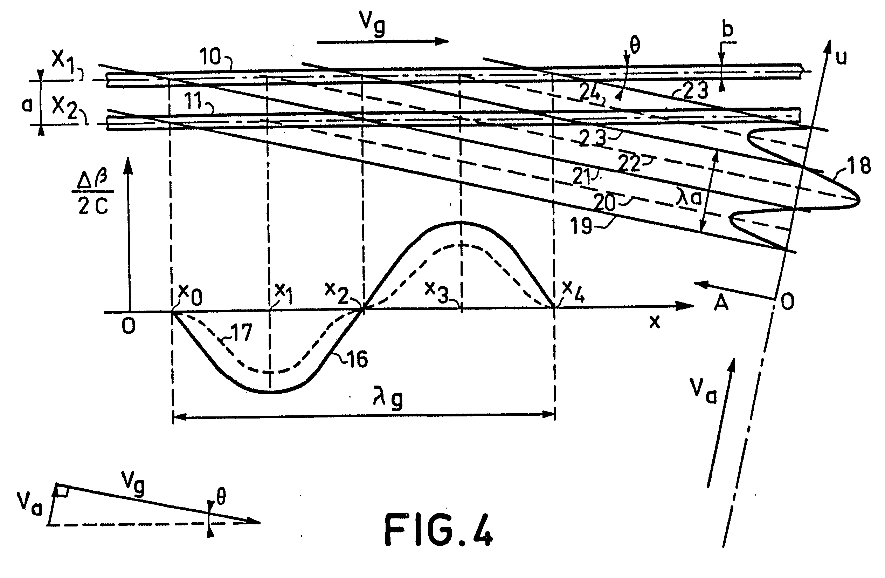

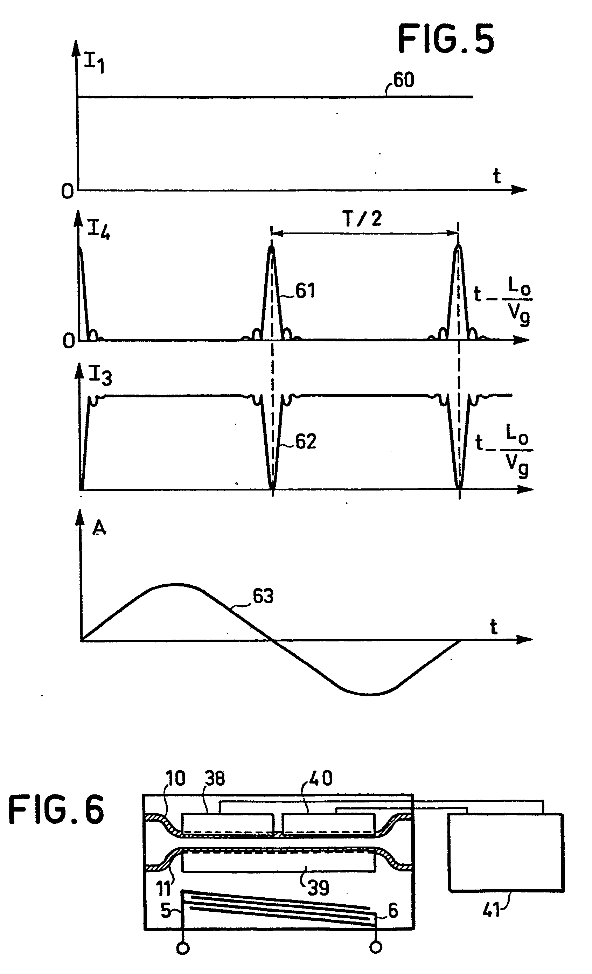

Le mode de fonctionnement de la structure de la figure 3 peut mieux se comprendre au moyen des figures 4 et 5.

La figure 4 représente à un instant déterminé la configuration des contraintes mécaniques imposée par l'onde élastique de surface dans le plan de la surface 8. Soit dit en passant, l'onde élastique de surface peut être par exemple une onde de Rayleigh, mais ce peut être aussi une onde d'interface. Les axes $X_1$ et $X_2$ des deux guides 10 et 11 présentent un écartement a et leur largeur b est inférieure à a. L'onde élastique de surface est représentée par des fronts d'ondes 19, 20, 21, 22, 23, 24 et 25 qui rencontrent les axes $X_1$ et $X_2$ avec une inclinaison $\theta$. Le diagramme A,u montre la variation de contrainte mécanique produite par l'onde élastique. Dans le cas de la figure 4, cette contrainte évolue sinusoïdalement comme le montre la courbe 18. Cette onde progresse avec une vitesse acoustique $v_a$ mesurée perpendiculairement au front d'onde.

L'inclinaison $\theta$ est choisie de façon que la vitesse apparente de l'onde élastique selon l'axe $X_1$ ou $X_2$ des guides d'onde coincide avec la vitesse de groupe $v_g$ des photons guidés. On a donc la relation: $v_a=v_g \cdot \sin \theta$.

Compte-tenu de la très faible valeur du rapport

$$\frac{v_a}{v_g},$$

on peut écrire: $v_a/v_g=\theta$ avec $\cos \theta=1$.

Dans le cas simple où des variations $\Delta n$ égales et de signes contraires affectent les guides 10 et 11 à une abscisse $x_1$, les fronts d'ondes 20 et 22 qui correspondent à des contraintes maximales $+A$ et $-A$ sont écartés de $\lambda/2$ ou en général de $(2k-1)\lambda_{a/2}$, k étant un entier positif quelconque. Il en résulte qu'aux abscisses $x_0$, $x_2$ et $x_4$ la variation totale d'indice $2 \Delta n$ est nulle et qu'aux abscisses $x_1$ et $x_3$ elle est respectivement maximale négative et positive. En utilisant comme paramètre la grandeur $\Delta\beta/2c$ de la figure 2, on a représenté sur la figure 4 la perturbation de la constante de phase optique en fonction de x. La courbe sinusoidale 16 se rapporte à des guides d'ondes infiniment minces (b=0) et la courbe 17 en pointillé à des guides d'ondes réels (b=0). Sachant que $\lambda_g$ est la période spatiale de la perturbation et que $\lambda_a$ est la longueur d'onde acoustique, on a:

$$\frac{\lambda_a}{\lambda_g}=\theta \text{ et } a=(2k-1)\lambda_{a/2}.$$

Les photons qui occupent les abscisses $x_0$, $x_2$ et $x_4$ subissent un transfert total, mais les photons intermédiaires sont de moins en moins transférables lorsqu'on s'éloigne de ces abscisses. En tenant compte de la loi de variation de la figure 2, on peut donner l'allure des intensités de rayonnement recueillies dans les voies 3 et 4 du coupleur directionnel lorsqu'il reçoit sur la voie 1 un rayonnement continu.

La figure 5 montre par la courbe 60 la puissance incidente $I_1$ sur la voie 1 du coupleur directionnel. La contrainte A imposée par l'onde élastique de surface est représentée par la courbe 63. Ces deux courbes sont tracées avec pour référence la même échelle de temps t. Les puissances $I_3$ et $I_4$ recueillies dans les voies 3 et 4 sont représentées par les courbes 62 et 61 qui sont complémentaires. Les courbes 61 et 62 ont été tracées en prenant

$$(t-\frac{L_o}{v_g})$$

pour l'échelle de temps, car on a tenu compte du retard de transmission $L_o/v_g$ sur la distance de couplage $L_o$.

La puissance dans la voie 4 se présente sous la forme d'impulsions ayant le profil de la figure 2. L'étroitesse de ces impulsions est d'autant plus grande que le gradient d'indice est grand autour des abscisses $x_0$, $x_2$ et $x_4$. La période des impulsions est égale à la moitié de la période de l'onde acoustique de surface.

Le train d'impulsions recueilli dans la voie 4 forme une fonction périodique quelle que soit la longueur de couplage choisie. Cependant, pour réaliser un transfert total il faut que la longueur $L_o$ soit choisie convenablement.

On peut donc résumer les caractéristiques de fonctionnement par les relations suivantes:

$$v_a/v_g = \theta \qquad (1)$$

$$T = \frac{\lambda_a}{v_a} = \frac{2a}{(2k-1)v_a} \qquad (2)$$

$$L_o = \frac{(2k'-1)\pi}{2c} \qquad (3)$$

où k et k' sont des entiers positifs.

A titre d'exemple non limitatif, dans le cas particulier ou k et k' sont égaux à l'unité, avec un substrat en niobate de lithium et des guides obtenus par diffusion de titane l'indice effectif $n_e$ est égal à 2, 3, ce qui donne une vitesse de groupe $v_g = 1,304 \cdot 10^8$ m/sec. Des ondes élastiques de surface ayant une vitesse $v_a = 3500$ m/sec conduisent à une inclinaison $\theta$ égale à 0,0000268 radian.

Pour une longueur de couplage $L_o$ de 10 cm, réalisant un transfert total avec un écartement $a = 7,7$ $\mu$m, la longueur d'onde des ondes élastiques sera $\lambda_a = 15,4$ $\mu$m.

La fréquence d'excitation du transducteur électromécanique $f_a$ est égale à 227 MHz.

L'intervalle entre deux impulsions couplées dans la voie 4 est d'environ 2,2 ns.

En prenant en considération une variation sinusoidale de l'indice d'amplitude $\Delta n$ et en se reportant au diagramme de la figure 2, on peut calculer la durée $\tau$ liée à la largeur à mi-puissance d. Cette durée a pour valeur:

$$\tau = \frac{0,8}{4\pi\Delta n} \cdot \frac{\lambda_o}{L_o} \cdot T$$

ou $\lambda_o$ est la longueur d'onde du rayonnement optique dans le vide. Dans le cas d'un rayonnement monochromatique cette durée a une valeur définie.

Dans l'exemple cité, avec $\lambda_o = 1$ $\mu$m, $\Delta n = 10^{-3}$, on trouve une durée de 2,8 picoseconde. Comme la largeur des guides n'est pas nulle, l'allure de la variation de

$$\frac{\Delta\beta}{2c}$$

n'est pas tout à fait sinusoidale, d'où un élargissement de la durée $\tau$. Cependant, en utilisant une onde élastique de fréquence 2,6 GHz, on arrive à obtenir des impulsions d'une durée égale à une fraction de picoseconde.

Le coupleur directionnel de la figure 3 permet d'envisager un réglage électrique de la longueur de transfert total. A cet effet des électrodes peuvent être ajoutées comme le montre la figure 6. Le guide 11 est recouvert sur toute le longueur de couplage par une première électrode 39, tandis que le guide 10 est recouvert moitié par moitié par deux électrodes 38 et 40. Un générateur 41 fournit aux électrodes 38 et 40 une tension de polarisation réglable. Par effet électro-optique, cette tension influence les constantes de phase de manière à réaliser un transfert total.

La relation (1) qui précède donne l'inclinaison $\theta$ des fronts d'ondes par rapport aux guides d'ondes. Cette inclinaison est de faible valeur puisqu'avec les chiffres donnés ci-desus, on trouve $\theta = 0,0000268$ rad, c'est à dire une dénivellation de seulement 2,68 micron pour 10 cm de longueur.

Cette dénivellation est à la portée des techniques de photolithographie actuelles, car la délimitation des guides d'ondes et des dents de peignes peut être réalisée avec une extrême précision.

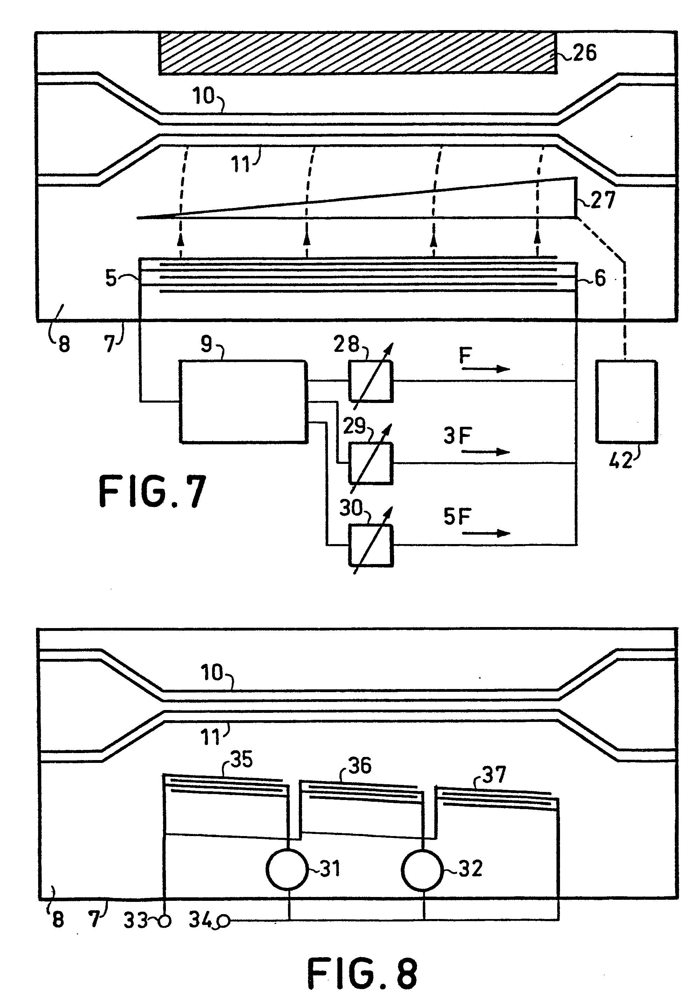

Cependant, pour obtenir l'inclinaison désirée des fronts d'ondes, on peut utiliser avantageusement une plage déviatrice. Cette solution est illustrée par la figure 7 qui montre un transducteur 5—6 dont les dents de peignes sont orientées parallèlement aux sections rectilignes des guides d'ondes 10 et 11. Des moyens déviateurs d'ondes élastiques de surface 27 sont intercalés entre le transducteur 5—6 et la section de couplage directionnel 10—11. Comme moyen déviateur, on peut utiliser une zone prismatique creusée en cuvette pour réaliser une réfraction de type géodésique. On peut aussi déposer une couche triangulaire qui par court-circuit du champ électrique ou par effet de masse modifie la vitesse de phase des ondes élastiques de surface. On peut encore modifier par bombardement ionique la structure du substrat ou prévoir une électrode qui en liaison avec une source de polarisation 42 introduit un changement de phase dû à la non linéarité du tenseur piézo-électrique du matériau constituant le substrat.

L'absorption des ondes élastiques de surface peut être assurée par une couche de matière absorbante 26 placée en aval du coupleur directionnel. Un autre perfectionnement illustré sur la figure 7 consiste à alimenter le transducteur 5—6 par plusieurs tensions de fréquences F, 3F, 5F. Des circuits de réglage 28, 29 et 30 permettent d'ajuster ces tensions en amplitude et en phase, pour obtenir à la rencontre des guides d'ondes 10 et 11 une variation d'indice à front raide. Cette variation à front raide permet de réduire la durée des impulsions couplées.

La figure 8 montre que le transducteur électromécanique peut être scindé en plusieurs sections 35, 36 et 37. En alimentant ces sections via des circuits déphaseurs 31 et 32 reliés aux bornes d'alimentation 33 et 34, on peut obtenir des légères déformations du front d'onde rayonné pour que son inclinaison $\theta$ vérifie la condition d'accord de phase. Les circuits déphaseurs 31 et 32 peuvent être avantageusement constitués par des connexions de longueur ajustable déposées sur le substrat 8.

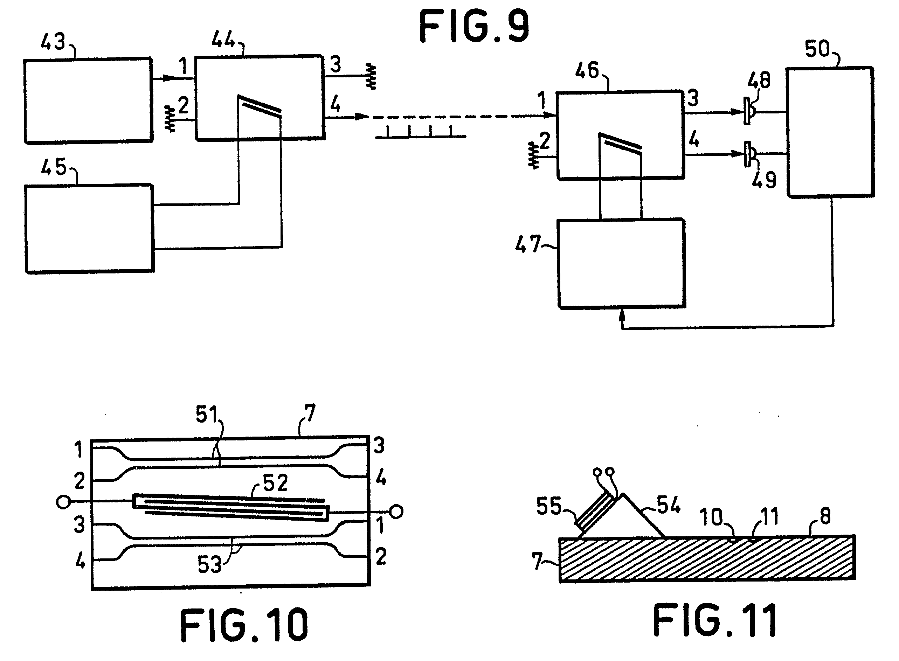

Sur la figure 9, on peut voir un système optique à impulsions utilisant deux coupleurs directionnels. Une source de rayonnement continu monochromatique 43 est couplée à la voie 1 du coupleur directionnel 44. Ce coupleur est placé sous le contrôle d'un générateur alternatif 45 qui alimente un transducteur électromécanique. La voie 4 du coupleur 44 délivre des impulsions ultra courtes à la fréquence double de celle du générateur 45. Les impulsions délivrées par le coupleur directionnel 44 sont appliquées à la voie 1 d'un coupleur directionnel 46 de structure identique à celle du coupleur 44. Les voies 3 et 4 du coupleur 46 sont reliées à des détecteurs de rayonnement 48 et 49 qui alimentent les deux entrées d'un circuit comparateur 50. Le coupleur 46 est placé sous le contrôle d'un générateur alternatif 47 à accord réglable. Le circuit comparateur 50 commande l'accord en fréquence du générateur 47. Si l'on considère le générateur 45 comme une horloge primaire et si le générateur 47 représente une horloge secondaire, le système de la figure 9 permet de réaliser le calage en fréquence et en phase des deux horloges. Le circuit comparateur 50 élabore un signal d'accord fonction du rapport de transfert mesuré par les deux détecteurs 48 et 49. Le calage de l'horloge 47 intervient lorsque la voie 4 du coupleur 46 délivre seule les impulsions injectées dans la voie 1. Un nouveau réglage d'accord est déclanché par le circuit comparateur 50 lorsque le transfert total vers la voie 4 se détériore.

L'invention n'est pas limitée au cas où un seul coupleur directionnel est placé sur le trajet des ondes élastiques. Sur la figure 10, on peut voir deux structures de coupleurs directionnels 51 et 53 placées de part et d'autre d'un transducteur électromécanique 52. Les dents du transducteur 52 sont inclinées par rapport aux sections rectilignes des deux coupleurs 51 et 53. Dans le cas de la figure 10, les guides d'ondes sont tous parallèles; la numérotation des voies indique le sens dans lequel a lieu le couplage. On pourrait prévoir plusieurs coupleurs directionnels de chaque côté du transducteur électromécanique 52. Inversément, un coupleur directionnel peut être irradié par les ondes élastiques provenant de plusieurs transducteurs agencés sur le substrat 7. En faisant fonctionner alternativement ces transducteurs et en choisissant convenablement l'inclinaison des fronts d'onde, il est possible de réaliser un couplage directionnel dans les deux sens de circulation.

L'invention n'est pas limitée aux transducteurs composés d'électrodes en peignes interdigités déposées sur un substrat piézoélectrique.

En effet l'interaction décrite précédemment n'implique pas que le substrat 7 soit piézoélectrique et qu'il soit fait d'un matériau électro-optique.

Sur la figure 11, on peut voir un dispositif de couplage directionnel dans lequel les ondes élastiques sont émises par un transducteur électromécanique 55 émettant des ondes longitudinales ou transversales. Un prisme de couplage 54 adapte la vitesse des ondes émises par le transducteur 55 à celle des ondes élastiques propagées par la surface 8.

Dans la description qui précède, la seule condition impérative est que l'inclinaison $\theta$ des fronts d'ondes élastiques doit vérifier la relation

$$\theta = \frac{v_a}{v_g}$$

Pour rendre plus aisée l'explication du fonctionnement on avait considéré jusqu'ici que deux photons ayant la même position le long du coupleur devaient subir la même perturbation nulle pour réaliser un transfert maximal. Cette condition n'est pas impérative.

L'étude générale montre que lorsque la condition

$$\lambda_a = \frac{2a}{(2k-1)}$$

n'est pas vérifiée pour une valeur entière positive de k, on obtient dans la voie 4 des impulsions qui ne sont plus régulièrement espacées dans le temps et qui deviennent plus larges.

La largeur des impulsions est donnée par la relation:

$$\tau = \frac{0.8\lambda_0}{4\pi L_0} \cdot \left(\frac{T}{\Delta n}\right) \cdot \frac{1}{\sin \pi a/\lambda_a}$$

En particulier, le facteur

$$\frac{1}{\sin \pi a/\lambda_a}$$

est égal à l'unité lorsque k est égal à un entier positif. Par contre, ce facteur tend vers l'infini si k est égal à la moitié d'un nombre impair.

Cette dernière formule montre que l'on peut moduler la largeur $\tau$ des impulsions en faisant varier l'amplitude ou la fréquence de l'onde élastique. Lorsqu'on fait varier la fréquence, les impulsions cessent d'être isochrones.

**Revendications**

1. Structure optique intégrée à couplage directionnel conforme comprenant un substrat à la surface duquel sont agencés deux guides d'ondes optiques réalisant un échange d'énergie selon une distance de couplage prédéterminée, cet échange étant gouverné par des moyens conformateurs assurant selon cette surface la propagation synchrone d'une perturbation d'indice accompagnant les photons guidés, cette perturbation étant induite par une onde progressive, caractérisée en ce que lesdits moyens conformateurs comprennent un transducteur électromécanique (5, 6) d'émission de ladite onde, ladite onde progressive étant une onde élastique de surface, l'obliquité des fronts d'ondes atteignant lesdits guides d'ondes (10, 11) étant telle qu'elle réalise ladite propagation synchrone.

2. Structure selon la revendication 1, caractérisée en ce que la demi longueur d'onde de l'onde élastique de surface est un sous-multiple impair de l'écartement desdits guides d'ondes (10, 11).

3. Structure selon la revendication 1, caractérisée en ce que ledit transducteur est un transducteur constitué par deux électrodes interdigitées (5, 6) en forme de peignes; ledit substrat comprenant un matériau piézoélectrique sur lequel reposent lesdites électrodes.

4. Structure selon la revendication 3, caractérisé en ce que ledit substrat est constitué par du niobate de lithium; lesdits guides d'ondes (10, 11) étant obtenus par diffusion de titane.

5. Structure selon l'une quelconque des revendications 1 à 4, caractérisé en ce que le substrat (7) comporte plusieurs coupleurs directionnels.

6. Structure selon l'une quelconque des revendications 1 à 4, caractérisée en ce que le substrat (7) comporte plusieurs transducteurs électromécaniques (5, 6).

7. Structure selon l'une quelconque des revendications 1 à 6, caractérisée en ce que l'onde élastique de surface est une onde sinusoidale.

8. Structure selon l'une quelconque des revendications 1 à 6, caractérisée en ce que le transducteur (5, 6) est excité par un signal alternatif et ses harmoniques de rang impair.

9. Structure selon l'une quelconque des revendications 1 à 8, caractérisée en ce que des moyens déviateurs de fronts d'ondes (27) sont intercalés entre ledit transducteur (5, 6) et lesdits guides (10, 11).

10. Structure selon l'une quelconque des revendications 1 à 9, caractérisée en ce qu'il comprend des moyens de réglage électrique (38, 40, 39, 41) de la longueur de couplage.

11. Structure selon l'une quelconque des revendications 1 à 10, caractérisée en ce que ledit transducteur comporte un alignement de transducteur élémentaires (35, 36, 37) alimentés par des circuits (31, 32) d'ajustement de phase.

12. Structure selon l'une quelconque des revendications 1 à 11, caractérisée en ce que la longueur de couplage ($L_o$) assure un transfert total.

13. Structure selon la revendication 1, caractérisée en ce que la demilongueur d'onde $\lambda_a$ de l'onde élastique de surface est choisie différente d'un sous multiple impair de l'écartement a desdits guides (10, 11), afin que les impulsions couplées aient une durée accrue dans le rapport $1/\sin(\pi a/\lambda_a)$.

14. Système de transmission par train d'impulsions optiques, comprenant au moins une structure selon l'une quelconque des revendications précédentes, caractérisé en ce qu'il comprend des moyens générateurs desdites impulsions associant à ladite structure une source de rayonnement à émission continue (43).

15. Système suivant la revendication 14, caractérisé en ce que ladite source (43) émet un rayonnement monochromatique.

**Patentansprüche**

1. Integrierte optische Struktur mit konformer Richtungskopplung die eine Unterlage besitzt an deren Oberfläche zwei optische Wellenleiter angebracht sind, die einen Energieaustausch entsprechend einer vorgegebenen Kopplungsstrecke bewirken, wobei dieser Austausch von gestaltenden Mitteln beherrscht wird, welche entsprechend dieser Oberfläche das, die geleiteten Photonen begleitende, gleichlaufende Fortschreiten einer Indexstörung gewährleisten, wobei diese Störung von einer fortschreitenden Welle induziert wird, dadurch gekennzeichnet, dass die besagten gestaltenden Mittel einen elektromechanischen Transduktor (5, 6) zur Aussendung der besagten Welle besitzen, wobei die besagte fortschreitende Welle eine elastische Oberflächenwelle ist, und die Neigung der besagten Wellenleiter (10, 11) erreichenden Wellenfronten dergestalt ist, dass sie die besagte gleichlaufende Ausbreitung bewirkt.

2. Struktur nach Anspruch 1, dadurch gekennzeichnet, dass die halbe Wellenlänge der elastischen Oberflächenwelle eine ungerade Submultiple des Abstands der besagten Wellenleiter (10, 11) ist.

3. Struktur nach Anspruch 1, dadurch gekennzeichnet, dass der besagte Transduktor ein aus zwei, in Form eines Kammes zwischengesetzte Elektroden (5, 6) bestehender Transduktor ist; dabei weist die besagte Unterlage einen piezoelektronischen Stoff auf, auf dem die besagten Elektroden aufliegen.

4. Struktur nach Anspruch 3, dadurch gekennzeichnet, dass die besagte Unterlage aus Lithiumniobat gebildet ist; die besagten Wellenleiter (10, 11) wurden durch· Titandiffusion erhalten.

5. Struktur nach Anspruch 1 bis 4, dadurch gekennzeichnet, dass die Unterlage (7) mehrere Richtungskopplungen besitzt.

6. Struktur nach Anspruch 1 bis 4, dadurch gekennzeichnet, dass die Unterlage (7) mehrere elektromechanische Transduktoren (5, 6) besitzt.

7. Struktur nach Anspruch 1 bis 6, dadurch gekennzeichnet, dass die elastische Oberflächenwelle eine sinusförmige Welle ist.

8. Struktur nach Anspruch 1 bis 6, dadurch gekennzeichnet, dass der Transduktor (5, 6) durch ein abwechselndes Signal und seine harmonische Wellen ungerader Rangstufe angeregt wird.

9. Struktur nach Anspruch 1 bis 8, dadurch gekennzeichnet, dass die Wellenfront (27) ablenkenden Mittel zwischen den besagten Transduktor (5, 6) und die besagten Leiter (10, 11) eingesetzt sind.

10. Struktur nach Anspruch 1 bis 9, dadurch gekennzeichnet, dass er Mittel zur elektrischen Regelung (38, 40, 39, 41) der Kopplungsstrecke enthält.

11. Struktur nach Anspruch 1 bis 10, dadurch gekennzeichnet, dass der besagte Transduktor eine Reihe von Elementartransduktoren (35, 36, 37) besitzt, welche durch Schaltungen (31, 32) zur Phaseneinstellung gespeist werden.

12. Struktur nach Anspruch 1 bis 11, dadurch gekennzeichnet, dass die Kopplungsstrecke ($L_o$) einen vollständigen Transfer gewährleistet.

13. Struktur nach Anspruch 1, dadurch gekennzeichnet, dass die halbe Wellenlänge $\lambda_a$ der elastischen Oberflächenwelle unterschiedlich der ungeraden Submultiplen der Entfernung a der besagten Leiter (10, 11) gewählt ist, damit die gekoppelten Impulse eine grössere Dauer in dem Verhältnis $1/\sin(\pi a/\lambda_a)$ haben.

14. Übertragungssystem durch optische Impulsfolgen, das zumindest eine Struktur nach einem der vorherstehenden Ansprüche besitzt, dadurch gekennzeichnet, dass es die besagten Impulse erzeugende Mittel besitzt, welche die besagte Struktur mit einer eine kontinuierliche Strahlung aussendenden Strahlenquelle (43) verbinden.

15. System nach Anspruch 14, dadurch gekennzeichnet, dass die besagte Quelle (43) monochromatische Strahlung aussendet.

## Claims

1. Optical structure integrated to conform directional coupling, comprising a substrate at the surface of which are disposed two optical wave guides realizing an energy exchange according to a predetermined coupling distance, this exchange being governed by conforming means ensuring on this surface the synchronous propagation of an index perturbation accompanying the guided photons, this perturbation being induced by a progressive· wave, characterized in that the said conforming means comprising an emission telemechanical transducer (5, 6) of the said wave the said progressive wave being a surface elastic wave, the obliquity of the wave fronts reaching said wave guides (10, 11) being such that· it realizes the said synchronous propagation.

2. Structure according to claim 1, characterized in that the half wave length of the elastic surface wave is an uneven spacing sub-multiple of the said wave guides (10, 11).

3. Structure according to claim 1, characterized in that the said transducer is a transducer constituted by two electrodes (5, 6) in the form of two interdigited combs, the said substrate comprising a piezoelectric material on which rests the said electrodes.

4. Structure according to claim 3, characterized in that said substrate is constituted by lithium niobate, the said wave guides (10, 11) being obtained by titanium diffusion.

5. Structure according to one of claims 1 to 4, characterized in that the substrate (7) comprises several directional couplers.

6. Structure according to any one of claims 1 to 4, characterized in that the substrate (7) comprises several electromechanical transducers (5, 6).

7. Structure according to any one of claims 1 to 6, characterized in that the surface elastic wave is a sinusoidal wave.

8. Structure according to any one of claims 1 to 6, characterized in the transducer (5, 6) is stimulated by an alternating signal and its harmonics of uneven rank.

9. Structure according to any one of claims 1 to 8, characterized in that the deviation means of the wave fronts (27) are intercalated between said transducer (5, 6) and the said guides (10, 11).

10. Structure according to any one of claims 1 to 9, characterized in that it comprises electrical adjustment means (38, 40, 39, 41) of the coupling length.

11. Structure according to any one of claims 1 to 10, characterized in that the said transducer comprises an alignment of elementary transducers (35, 36, 37) fed by phase adjustment circuits (31, 32).

12. Structure according to any one of claims 1 to 11, characterized in that the coupling length ($L_o$) ensures total transfer.

13. Structure according to claim 1, characterized in that the half of the wave length $\lambda_a$ of the surface elastic wave is selected different from an uneven sub-multiple of the spacing of said guides (10, 11) in order that the coupled

15 0 047 196 16

impulses have an increased duration in the ratio $1/\sin (\pi a/\lambda_e)$.

14. Transmission system by optical impulse train, comprising at least one structure according to any one of the preceding claims, characterized in that it comprises generating means of the said impulses associating to the said structure a continuous emission radiation source (43).

15. System according to claim 14, characterized in that said source emits a monochromatic radiation.

0 047 196

# FIG.1

# FIG.2

1

# FIG.3

FIG.4

FIG.5

$I_1$

60

t

0

$I_4$

T/2

61

$t \; \dfrac{L_o}{V_g}$

0

$I_3$

62

$t \; \dfrac{L_o}{V_g}$

A

63

t

FIG.6

10  38  40

11

5  39  6

41

FIG.7

FIG.8

# FIG.9

# FIG.10

# FIG.11

0 047 196